# EUROPÄISCHE PATENTANMELDUNG

(11) **EP 3 910 439 A1**
(43) Veröffentlichungstag der Anmeldung: **17.11.2021**
(21) Anmeldenummer: 20174149.3
(22) Anmeldetag: 12.05.2020
(51) Int. Cl.: G05D 1/02, G01S 17/08

(54) **SENSORANORDNUNG UND VERFAHREN ZUM BETRIEB EINER SENSORANORDNUNG**

(71) Anmelder: Leuze electronic GmbH + Co. KG, 73277 Owen/Teck (DE)
(72) Erfinder: Feller, Bernhard, 86316 Friedberg (DE); Sanzi, Dr., Friedrich, 73230 Kirchheim/Teck (DE)
(74) Vertreter: Ruckh, Rainer Gerhard

(57) **Zusammenfassung**

Die Erfindung betrifft eine Sensoranordnung (10) mit einem Messwerte (101) generierenden Sensor (1), mit einem Rechenmodul, in welchem mittels eines Algorithmus (102) aus den Messwerten (101) abgeleitete Größen (103) generiert werden, mit einer Sicherheitsfunktion (201), mit welcher abhängig von im Rechenmodul oder einer externen Datenquelle (301) generierten abgeleiteten Grö-ßen (103) ein Sicherheitsergebnis generiert wird, mit einem Systemmodellierungsmodul, in welchem aus abgeleiteten Größen (103) zurückgerechnete Werte (105) in einem Sensorraum des Sensors (1) generiert werden, und mit einer Verifikationseinheit, in welcher eine Verifizierung des Algorithmus (102) oder von Daten der externen Datenquelle (301) durch einen Vergleich der zurückgerechneten Werte (105) mit den Messwerten (101) erfolgt. Die Erfindung betrifft weiterhin ein entsprechendes Verfahren.

## Beschreibung

Die Erfindung betrifft eine Sensoranordnung und ein Verfahren zum Betrieb einer Sensoranordnung.

Derartige Sensoranordnungen umfassen einen Messwerte generierenden Sensor. Diese messenden Sensoren können beispielsweise von Flächendistanzsensoren, das heißt scannenden Distanzsensoren, oder auch Kamerasensoren ausgebildet sein.

Diese Sensoren können in unterschiedlichen industriellen Applikationen eingesetzt werden, wobei die Sensoren insbesondere Überwachungsfunktionen wahrnehmen, um Automatisierungsprozesse zu überwachen und kontrollieren. Die Funktionsweise eines derartigen Sensors ist derart, dass abhängig von den Messwerten in einem vorzugsweise im Sensor integrierten Sicherheitsmodul, insbesondere einem Überwachungsmodul, eine Sicherheitsfunktion, zum Beispiel eine Überwachungsfunktion, generiert wird, die generell auch eine Automatisierungsfunktion sein kann.

Beispielsweise kann aus Messwerten in Form von Positionswerten als Sicherheitsfunktion oder Automatisierungsfunktion Steuergrößen zur Steuerung eines fahrerlosen Transportfahrzeugs oder die Schutzfeldgröße für eine Überwachungsfunktion abgeleitet werden.

Insbesondere kann der Sensor als Sicherheitssensor ausgebildet sein, sodass die Sensoranordnung im Bereich der Sicherheitstechnik eingesetzt werden kann. Ein typischer Anwendungsfall ist eine Gefahrenbereichsüberwachung an einer gefahrbringenden Anlage, die insbesondere auch von einem Fahrzeug gebildet sein kann. In diesem Fall wird mit dem Sicherheitssensor ein Schutzfeld überwacht, das den Gefahrenbereich sichert. Im Fall einer Vorfeldüberwachung an einem fahrerlosen Transportfahrzeug muss das Schutzfeld an die aktuelle Fahrsituation angepasst werden.

Bei derartigen Sicherheitssensoren wird im Überwachungsmodul generell eine Sicherheitsfunktion generiert. Die Sicherheitsfunktion kann darin bestehen, eine zu überwachende Anlage abzuschalten, wenn im überwachten Schutzfeld ein Objekteingriff registriert wird. Dadurch wird die Anlage in einen sicheren Zustand überführt.

Eine weitere Sicherheitsfunktion kann eine automatische Schutzfeldumschaltung bei einer Schutzfeldüberwachung an einem fahrerlosen Transportfahrzeug sein, die abhängig von den aktuellen Messwerten des Sensors erfolgt.

Um Fehlfunktionen der Sensoranordnung auszuschließen, müssen die Berechnungsmethoden, mit denen aus Messwerten des Sensors Überwachungsfunktionen beziehungsweise Automatisierungsfunktionen generiert werden, zuverlässig sein. Bei Sensoranordnungen mit einem Sicherheitssensor sind diese Anforderungen noch erhöht, da für die Sensoranordnung und insbesondere den Sicherheitssensor hinsichtlich der Auswertung der Messwerte und der Generierung einer Sicherheitsfunktion eine hohe Fehlersicherheit gefordert wird.

Die Berechnungsmethoden und deren Überprüfung, die zur Generierung der Überwachungsfunktion beziehungsweise Sicherheitsfunktion eingesetzt werden, sind daher äußerst aufwändig.

Der Erfindung liegt die Aufgabe zugrunde eine Sensoranordnung bereitzustellen, die bei geringem Aufwand eine hohe Zuverlässigkeit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem Messwerte generierenden Sensor, mit einem Rechenmodul, in welchem mittels eines Algorithmus aus den Messwerten abgeleitete Größen generiert werden, mit einer Sicherheitsfunktion, mit welcher abhängig von im Rechenmodul oder einer externen Datenquelle generierten abgeleiteten Größen ein Sicherheitsergebnis generiert wird, mit einem Systemmodellierungsmodul, in welchem aus abgeleiteten Größen zurückgerechnete Werte in einem Sensorraum des Sensors generiert werden, und mit einer Verifikationseinheit, in welcher eine Verifizierung des Algorithmus oder von Daten der externen Datenquelle durch einen Vergleich der zurückgerechneten Werte mit den Messwerten erfolgt.

Die Erfindung betrifft weiterhin ein entsprechendes Verfahren.

Ein wesentlicher Vorteil der Erfindung besteht darin, dass zur Auswertung der Messwerte ein einfacher, insbesondere schätzender Algorithmus eingesetzt werden kann, der insbesondere eine schnelle und flexible Auswertung der Messwerte des Sensors ermöglicht. Dadurch können aus den Messwerten schnell die gewünschten Sicherheitsfunktionen, die auch als Überwachungsfunktionen, oder Automatisierungsfunktionen ausgebildet sein können, gewonnen werden, mittels derer Prozesse oder Anlagen kontrolliert beziehungsweise überwacht werden können.

Ein wesentlicher Aspekt der Erfindung besteht darin, dass der Algorithmus selbst nicht verifiziert sein muss um zu gewährleisten, dass aus den Messwerten zuverlässige abgeleitete Größen und damit fehlersichere Überwachungsfunktionen beziehungsweise Automatisierungsfunktionen generiert werden können, was eine breite Auswahl an geeigneten, leistungsfähigen Algorithmen ermöglicht.

Die notwendige Zuverlässigkeit beziehungsweise Fehlersicherheit der Sensoranordnung wird erfindungsgemäß durch eine Verifikation in einer Verifikationseinheit derart erhalten, dass die mit dem Algorithmus generierten abgeleiteten Größen, die generell Prozessgrößen bilden, in einem Systemmodellierungsmodul in zurückgerechnete Werte rückgerechnet werden. Wesentlich hierbei ist, dass die zurückgerechneten Werte im Sensorraum, das heißt im Abbildungsraum des Sensors generiert werden, sodass die zurückgerechneten Werte in der Verifikationseinheit unmittelbar zur Verifikation der Überwachungsfunktion mit den Messwerten verglichen werden. Dadurch kann der Algorithmus verifiziert, das heißt überprüft werden, sodass die Zuverlässigkeit mit der die Überwachungsfunktion generiert wird, nachprüfbar und damit kontrollierbar ist.

Gemäß einer Variante der Erfindung werden die abgeleitete Größen und daraus die Überwachungsfunktion nicht anhand realer Messwerte des Sensors sondern mit virtuellen Daten einer externen Datenquelle generiert. Die externe Datenquelle ist dabei vorteilhaft ein digitaler Zwilling, der ein virtuelles Abbild der Sensoranordnung insbesondere des Sensors ist. Die externe Datenquelle ist dabei vorteilhaft in einer Cloud und über eine Internetverbindung zugänglich.

Die mit der externen Datenquelle generierten Daten ersetzen die Sensorfunktion des Sensors vollständig und generieren in gleicher Weise wie der Sensor selbst die Überwachungsfunktion.

Auch in diesem Fall erfolgt mit der System-Modellierung eine Rückrechnung der abgeleiteten Größen in zurückgerechnete Werte im Sensorraum des Sensors, sodass dann wieder in der Verifikationseinheit eine Verifizierung der Überwachungsfunktion und damit der Daten der externen Datenquelle durch einen Vergleich der zurückgerechneten Werte mit den Messwerten des Sensors durchgeführt werden kann.

Durch diese Verifikation wird eine hohe Zuverlässigkeit und Fehlersicherheit bei der Generierung der Überwachungsfunktion auch dann erreicht, wenn die externe Datenquelle eine unsichere Datenquelle ist.

Gemäß einer besonders vorteilhaften Ausführungsform der Erfindung ist der Sensor ein Sicherheitssensor.

In diesem Fall ist die Überwachungsfunktion eine Sicherheitsfunktion.

Insbesondere kann mit dem Sicherheitssensor eine Schutzfeldüberwachung für eine Gefahrenbereichsüberwachung einer Anlage durchgeführt werden. Die Anlage kann auch von einem fahrerlosen Transportfahrzeug gebildet sein, bei welchem mit der Schutzfeldüberwachung des Sicherheitssensors das Vorfeld des fahrerlosen Transportfahrzeugs als Gefahrenbereich überwacht wird.

Eine Sicherheitsfunktion kann als Sicherheitsergebnis ein Abschalten, das heißt Stillsetzen der Anlage bewirken, wenn mit dem Sicherheitssensor ein Objekt im Schutzfeld detektiert wird. Weiterhin kann die Sicherheitsfunktion als Sicherheitsergebnis eine Schutzfeldumschaltung bewirken. Dies ist vorteilhaft bei einem fahrerlosen Transportfahrzeug der Fall, wo abhängig von dessen Geschwindigkeit und/oder Fahrtrichtung eine Umschaltung zwischen verschiedenen Schutzfeldern erfolgt.

Die Ausbildung des Sensors als Sicherheitssensor und damit der Einsatz der Sensoranordnung im Bereich der Sicherheitstechnik ist deshalb möglich, da durch die erfindungsgemäße Verifikation mittels der Verifikationseinheit eine hinreichende Fehlersicherheit bei der Generierung der Sicherheitsfunktion gewährleistet ist.

Diese Fehlersicherheit ist insbesondere auch dann gewährleistet, wenn die externe Datenquelle eine unsichere Datenquelle ist.

Die Fehlersicherheit ist auch dann gewährleistet, wenn der Algorithmus, mittels dessen aus den Messwerten des Sensors die Sicherheitsfunktion generiert wird, ein unsicherer Algorithmus ist.

Damit ist es möglich als Algorithmus auch Schätz-Algorithmen einzusetzen, die eine besonders flexible und schnelle Verarbeitung von Messwerten erlauben.

Insbesondere kann im Rechenmodul ein neuronales Netzwerk implementiert sein.

Der Sensor der erfindungsgemäßen Sensoranordnung ist generell als messender Sensor ausgebildet. Dabei kann der Sensor prinzipiell als Radarsensor oder Ultraschallsensor ausgebildet sein.

Besonders vorteilhaft ist der Sensor ein optischer Sensor.

Beispielsweise kann der optische Sensor als Flächendistanzsensor, das heißt scannender Distanzsensor ausgebildet sein. Weiterhin kann der Sensor als Kamerasensor ausgebildet sein, wobei besonders vorteilhaft dieser zur Durchführung von Distanzmessungen ausgebildet ist.

Gemäß einer vorteilhaften Ausführungsform werden in der Verifikationseinheit durch Ermitteln von Abweichungen der zurückgerechneten Werte bezüglich der Messwerte Verifikationsergebnisse generiert.

Durch die Ermittlung der Verifikationsergebnisse werden quantitative Aussagen über die Zuverlässigkeit der Generierung der Sicherheitsfunktion gewonnen. Die Sicherheitsfunktion kann zum Beispiel eine Überwachungsfunktion sein. Die Überwachungsfunktion liefert ein positives Überwachungsergebnis, wenn keine Verletzung eines Sollzustandes festgestellt wird (zum Beispiel wenn ein zu überwachendes Schutzfeld nicht verletzt wird).

Vorteilhaft wird zur Bestimmung von Verifikationsergebnissen eine zeitliche Bewertung der Abweichungen der zurückgerechneten Werte bezüglich der Messwerte durchgeführt.

Insbesondere wird über einen Zeitraum eine fortlaufende Summierung der Abweichungen der zurückgerechneten Werte bezüglich der Messwerte durchgeführt.

Durch diese zeitaufgelöste Bewertung werden besonders zuverlässige, aussagekräftige Verifikationsergebnisse erhalten.

Generell wird ein positives Überwachungsergebnis einer Überwachungsfunktion nur dann generiert, wenn mit der Verifikationseinheit ein positives Verifikationsergebnis erzeugt wird.

Dagegen wird bei einem negativen Verifikationsergebnis eine Sicherheitsmaßnahme ausgelöst.

Insbesondere ist als Sicherheitsmaßnahme eine Abschaltung des Sensors oder einer mit dem Sensor überwachten Anlage vorgesehen.

Dadurch ist die Zuverlässigkeit und Fehlersicherheit der Sensoranordnung bei der Generierung von abgeleiteten Größen und Überwachungsfunktionen, insbesondere Sicherheitsfunktionen, stets gewährleistet.

Gemäß einer besonders vorteilhaften Ausführungsform der Erfindung werden die Verifikationsergebnisse während des Betriebs des Sensors generiert.

Dies kann dann genutzt werden, die Prozesse zur Generierung der Überwachungsfunktion insbesondere der Sicherheitsfunktion fortlaufend zu optimieren.

Insbesondere werden abhängig von Verifikationsergebnissen Parameter des Algorithmus optimiert.

Damit ist es möglich zur Auswertung der Messwerte des Sensors einen unsicheren Algorithmus einzusetzen, der zudem mit schlecht angepassten Parametern starten kann. Durch die fortlaufende Optimierung der Parameter erfolgt eine selbstlernende Anpassung der Parameter, sodass dadurch der Algorithmus die notwendige Zuverlässigkeit bei der Generierung der Überwachungsfunktion liefert. Durch die fortlaufende Überwachung der Verifikationsergebnisse kann dabei überwacht werden, ob die selbstlernende Anpassung des Algorithmus tatsächlich erfolgreich ist. Nur wenn das der Fall ist, wird die Freigabe zur Generierung der Überwachungsfunktion erteilt. Im negativen Fall kann eine Sicherheitsmaßnahme, insbesondere eine Abschaltung des Sensors, ausgelöst werden, um unsichere Zustände zu vermeiden.

Ebenso können, wenn die externe Datenquelle zur Generierung der Überwachungsfunktion eingesetzt wird, abhängig vom Verifikationsergebnis Daten der externen Datenquelle ergänzt oder verbessert werden.

Die Erfindung wird im Folgenden anhand der Zeichnungen erläutert. Es zeigen:
- Figur 1:: Schematische Darstellung eines Sensors der erfindungsgemäßen Sensoranordnung.
- Figur 2:: Darstellung einer Schutzfeldüberwachung mit dem Sensor gemäß Figur 1.
- Figur 3:: Schematische Darstellung des Aufbaus der erfindungsgemäßen Sensoranordnung.
- Figur 4:: Beispiel der Funktionsweise einer Verifikationseinheit für die Sensoranordnung gemäß Figur 3.
- Figur 5:: Beispiel eines Algorithmus in Form eines neuronalen Netzwerks für die Sensoranordnung gemäß Figur 3.
- Figur 6:: Detaildarstellung für das neuronale Netzwerk gemäß Figur 5.
- Figur 7:: Beispiel für eine Optimierung eines neuronalen Netzwerks.
- Figur 8:: Erstes Beispiel einer Prozessgrößen-Verifikation für die Sensoranordnung gemäß Figur 3.
- Figur 9:: Zweites Beispiel einer Prozessgrößen-Verifikation für die Sensoranordnung gemäß Figur 3.
- Figur 10:: Drittes Beispiel einer Prozessgrößen-Verifikation für die Sensoranordnung gemäß Figur 3.

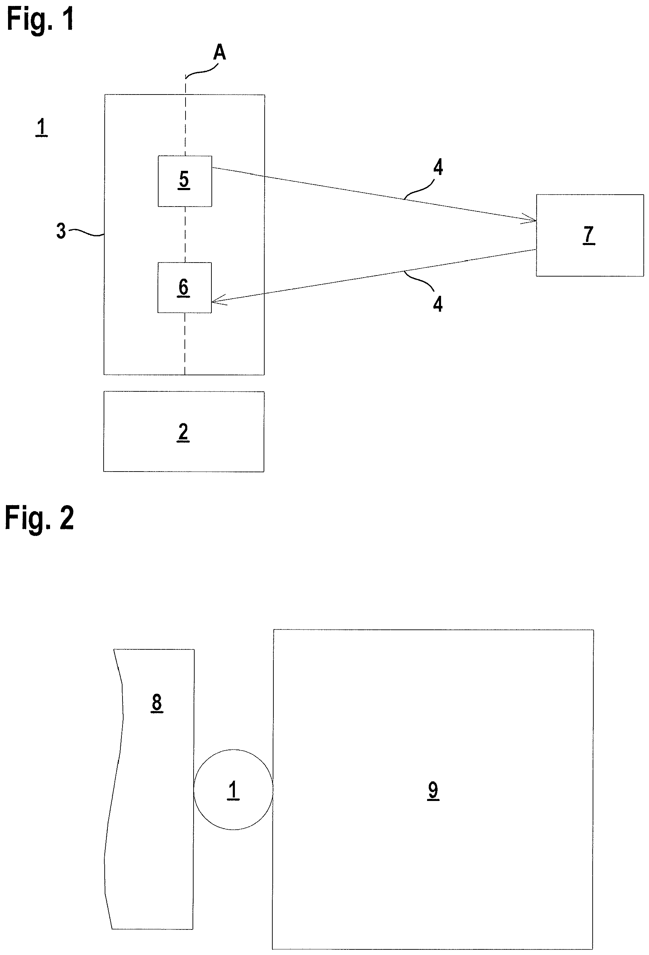

Figur 1 zeigt schematisch ein Ausführungsbeispiel eines Sensors 1 in Form eines optischen Sensors. Der optische Sensor ist im vorliegenden Fall als Flächendistanzsensor ausgebildet. Der Sensor 1 weist einen auf einem Sockel 2 gelagerten, um eine Drehachse A drehbar gelagerten rotierenden Messkopf 3 auf. In dem rotierenden Messkopf 3 sind mitrotierend ein Lichtstrahlen 4 emittierender Sender 5 und ein Lichtstrahlen 4 empfangender Empfänger 6 angeordnet. Der Sender 5 und der Empfänger 6 bilden einen nach einem Impuls-Laufzeit-Verfahren arbeitenden Distanzsensor. Hierzu emittiert der Sender 5 Lichtstrahlen 4 in Form von Lichtimpulsen. Zur Distanzmessung wird die Laufzeit der Lichtimpulse zu einem zu detektierenden Objekt 7 und zurück zum Sensor 1 erfasst. Durch die Drehbewegung des Messkopfes 3 werden die Lichtstrahlen 4 periodisch innerhalb eines flächigen Überwachungsbereichs abgelenkt.

Alternativ können der Sender 5 und Empfänger 6 in einem Gehäuse stationär angeordnet sein. Dann werden die Lichtstrahlen 4 des Senders 5 mittels einer rotierenden Ablenkeinheit abgelenkt.

Gemäß einer alternativen Ausgestaltung kann der optische Sensor als Kamerasensor ausgebildet sein, der vorzugsweise einen Bildsensor mit einer Matrix von lichtempfindlichen Empfangselementen und eine Beleuchtungseinheit aufweist. Vorzugsweise können für die einzelnen Empfangselemente Entfernungsmessungen nach einem Impuls-Laufzeit-Verfahren durchgeführt werden.

Der Sensor 1 gemäß Figur 1 ist vorzugsweise als Sicherheitssensor ausgebildet. Dabei kann der Sicherheitssensor insbesondere für eine Gefahrenbereichsüberwachung an einer gefahrbringenden Anlage, insbesondere auch an einem fahrerlosen Transportfahrzeug 8 gemäß Figur 2, eingesetzt werden.

Hierzu wird, wie Figur 2 zeigt, mit dem Sensor 1 ein Schutzfeld 9 daraufhin überwacht, ob ein Objekt 7 in dieses Schutzfeld 9 eindringt. Ist dies der Fall, wird vorzugsweise die Anlage stillgesetzt. Vorteilhaft ist eine Umschaltung von Schutzfeldern 9 bei dem Sensor 1 möglich. Im vorliegenden Fall ist der Sensor 1 an der Frontseite eines fahrerlosen Transportfahrzeugs 8 montiert, um dessen Vorfeld zu überwachen.

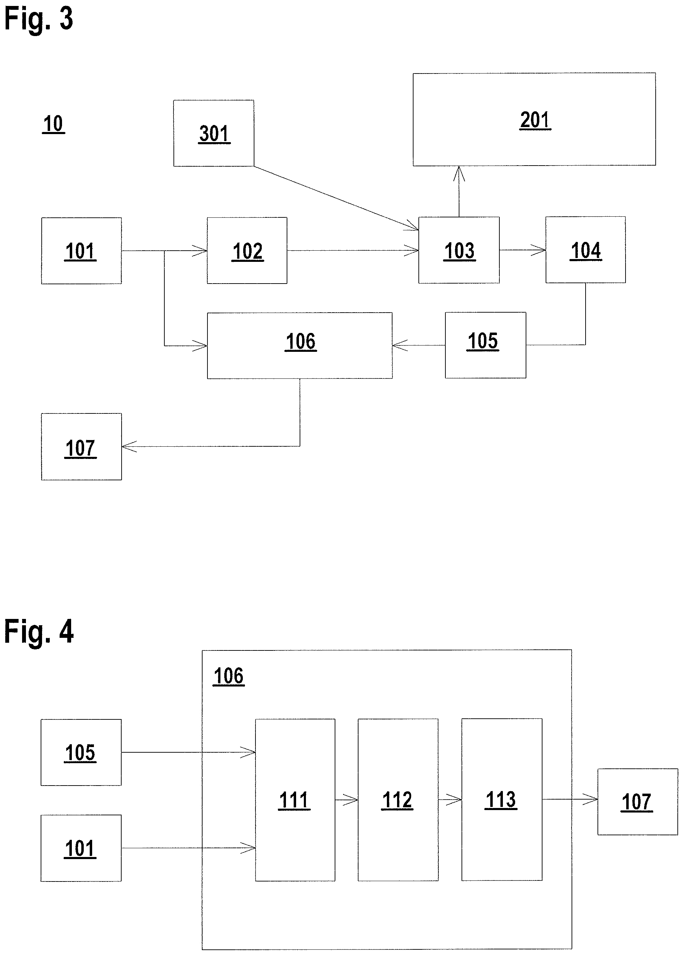

Figur 3 zeigt den Aufbau der erfindungsgemäßen Sensoranordnung 10, die einen Sensor 1 wie zum Beispiel in Figur 1 dargestellt aufweist. Dabei sind in Figur 4 die einzelnen Funktionsblöcke der Sensoranordnung 10 dargestellt.

Wie aus Figur 3 ersichtlich werden mit dem Sensor 1 generierte Messwerte 101, die bei dem Sensor 1 der Figuren 1 und 2 von Positionswerten gebildet sind, mit einem in einem Rechenmodul implementierten Algorithmus 102 verarbeitet. Abhängig von der Auswertung mit dem Algorithmus 102 werden abgeleitete Größen 103 generiert, die generell Prozessgrößen der Sensoranordnung 10 bilden. Für den Sensor 1 gemäß den Figuren 1 und 2 können die abgeleitete Größen 103 die aktuellen Geschwindigkeiten des fahrerlosen Transportfahrzeugs 8 sein. Abhängig von den abgeleiteten Größen 103 wird in einem Überwachungsmodul eine Sicherheitsfunktion 201 generiert für den Fall, dass der Sensor 1 ein Sicherheitssensor ist. Die Sicherheitsfunktion 201 kann als Sicherheitsergebnisse das Abschalten der überwachten Anlage oder eine Schutzfeldumschaltung generieren. Ist der Sensor 1 kein Sicherheitssensor wird allgemein anstelle eines Schutzfeldes 9 eine Überwachungsfunktion oder Automatisierungsfunktion generiert. Eine Überwachungsfunktion wie zum Beispiel die Überwachung eines Schutzfeldes 9 kann auch bei einem Sicherheitssensor vorgesehen sein.

Das Rechenmodul und das Überwachungsmodul können im Sensor 1 integriert sein.

Erfindungsgemäß werden die abgeleitete Größen 103 einem Systemmodellierungsmodul zugeführt, das ebenfalls im Sensor 1 integriert sein kann. Im Systemmodellierungsmodul erfolgt eine System-Modellierung 104 derart, dass die abgeleiteten Größen 103 in zurückgerechnete Werte 105 ausgerechnet werden, wobei die zurückgerechneten Werte 105 im Sensorraum des Sensors 1 generiert werden, sodass die zurückgerechneten Werte 105 und die Messwerte 101 in einer Verifikation 106, die in einer Verifikationseinheit durchgeführt wird, direkt miteinander verglichen werden. Abhängig hiervon wird ein Verifikationsergebnis 107 generiert. Auch die Verifikationseinheit kann im Sensor 1 integriert sein.

Wie Figur 3 zeigt, ist weiterhin eine externe Datenquelle 301 vorgesehen. Diese ist vorzugsweise von einem digitalen Zwilling gebildet, der ein virtuelles Abbild der Sensoranordnung 10 darstellt und der virtuelle Daten generiert. Die externe Datenquelle 301 kann eine unsichere Datenquelle sein. Die externe Datenquelle 301 befindet sich vorzugsweise in einer Cloud und ist über eine Internetverbindung zugänglich.

Anstelle der Verarbeitung der Messwerte 101 des Sensors 1 mit dem Algorithmus 102 können, wie Figur 3 zeigt, die abgeleiteten Größen 103 auch abhängig von den virtuellen Daten generiert werden.

Die Verifikation 106 der so generierten abgeleiteten Größen 103 erfolgt identisch wie bei abgeleitete Größen 103, die abhängig von den Messwerten 101 mit dem Algorithmus 102 erzeugt werden.

Figur 4 zeigt ein Beispiel für eine solche Verifikation 106 für eine skalare Größe, die zum Beispiel von eindimensionalen Positionswerten gebildet sein kann.

Aus den Messwerten 101 und den zurückgerechneten Werten 105 wird zur Durchführung der Verifikation 106 zunächst der Absolutwert der Differenz 111 gebildet. Über einen vorgegebenen Zeitraum erfolgt dann fortlaufend eine Summierung 112 dieser Absolutwerte von Differenzen 111. Alternativ kann statt einer Summierung von Absolutwerten von Differenzen 111 das Quadrat der Differenzen aufsummiert werden. Dann erfolgt eine zeitliche Bewertung 113 der summierten Werte derart, ob die Abweichung der Differenzen 111 einen Grenzwert überschreitet und/oder oder diese Abweichung länger als eine vorgegebene Zeit vorliegt.

Ist dies der Fall, wird ein negatives Verifikationsergebnis 107 erzeugt. Liegen die Abweichungen in einem erlaubten Bereich, wird ein positives Verifikationsergebnis 107 erzeugt.

Dementsprechend wird eine Überwachungsfunktion nur dann generiert, wenn mit der Verifikationseinheit ein positives Verifikationsergebnis 107 erzeugt wird.

Demgegenüber wird bei einem negativen Verifikationsergebnis 107 eine Sicherheitsmaßnahme ausgelöst.

Insbesondere ist als Sicherheitsmaßnahme eine Abschaltung des Sensors 1 oder einer mit dem Sensor 1 überwachten Anlage vorgesehen.

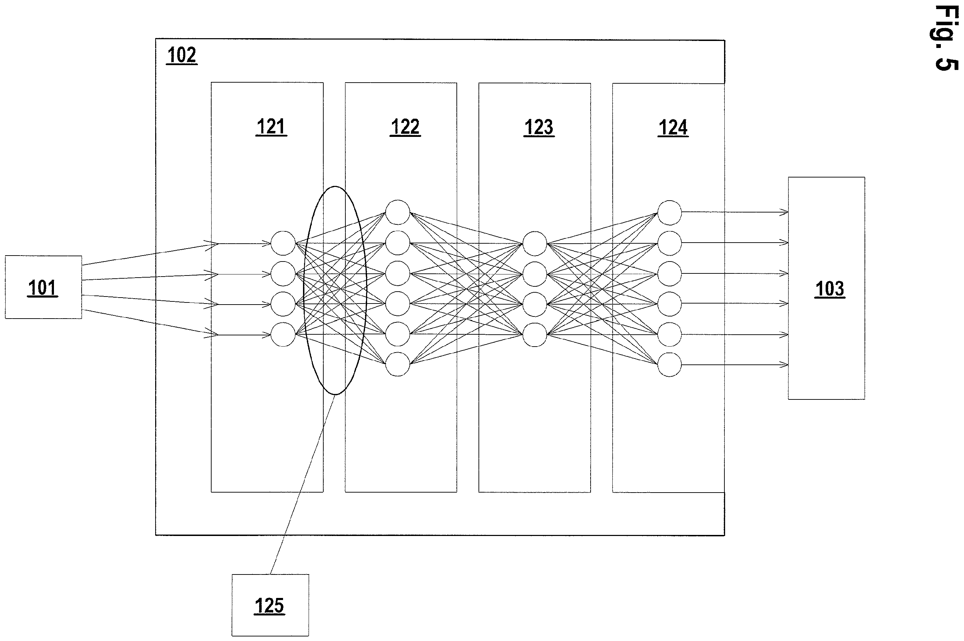

Figur 5 zeigt ein Beispiel eines Algorithmus 102 in Form eines neuronalen Netzwerks.

Das neuronale Netzwerk besteht aus Einzelfunktionen, die in einzelnen Schichten organisiert sind. Als Einzelfunktionen können Filterfunktionen, Funktionszusammenhänge, Übertragungsfunktionen, Entscheidungsmatrizen oder neuronale Vernetzungen vorgesehen sein.

Eine Eingangsschicht 121 dient zur Entgegennahme von Eingangsgrößen, die dann zu Zwischengrößen werden.

In Zwischenschichten 122, 123 erfolgt eine Abbildung von Zwischengrößen zu weiteren Zwischengrößen, wobei hier vorzugsweise eine Datenkonzentration erfolgt.

In einer Ausgangsschicht 124 erfolgt eine Zusammenfassung aller Größen zu wenigstens einem Gesamtergebnis.

Weiterhin ist eine Optimierung 125 der Verknüpfung einzelner Schichten möglich.

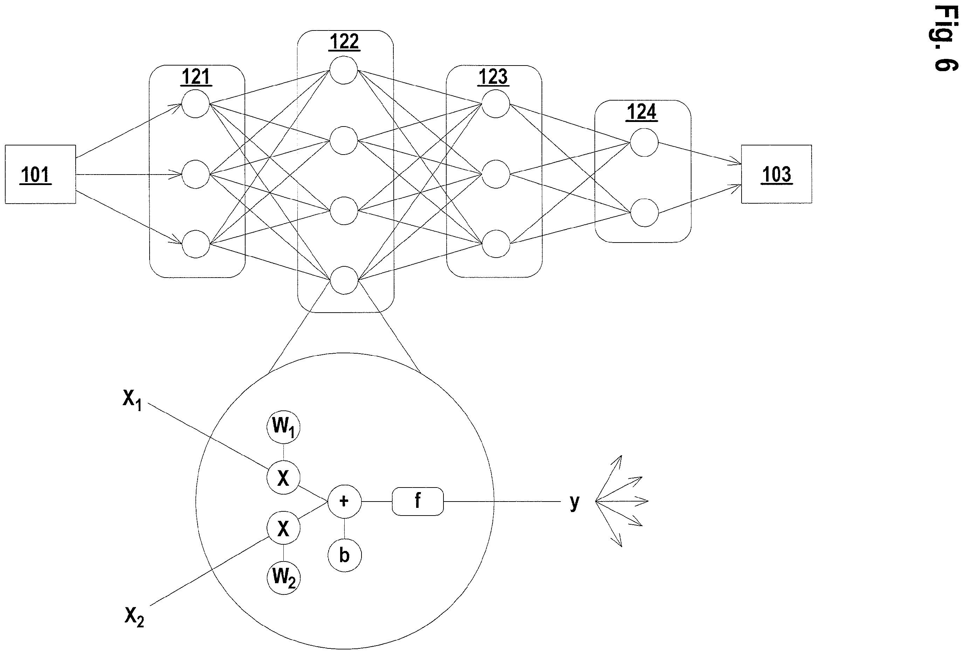

Figur 6 zeigt beispielsweise ein klassisches neuronales Netzwerk. Bei dieser Art des Netzwerks sind alle Neuronen einer Schicht mit jedem Neuron der nachfolgenden Schicht verknüpft. Die Eingangssignale xₙ (n = 1, 2) eines Neurons werden gewichtet wₙ (n = 1, 2) und aufsummiert. Zusätzlich wird ein weiteres Gewicht b addiert. Zum Abschluss wird das Zwischenergebnis einer Transferfunktion (Aktivierungsfunktion) f unterworfen, um das Ausgangssignal y des Neurons zu erhalten.

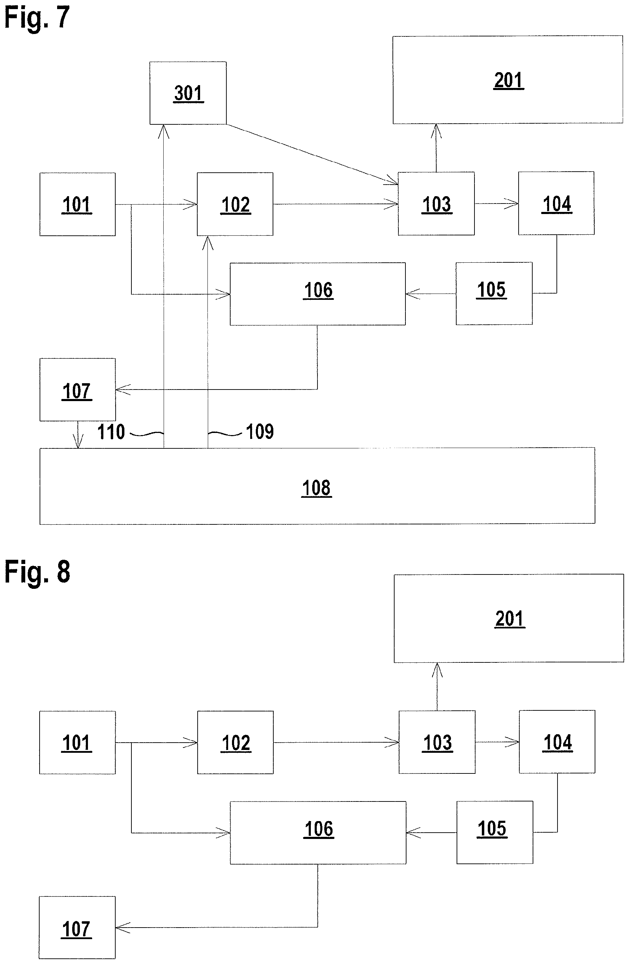

Figur 7 zeigt eine Optimierung 125 eines Algorithmus 102 in Form eines neuronalen Netzwerks im laufenden Betrieb der Sensoranordnung 10.

Das Diagramm gemäß Figur 7 entspricht dem Diagramm gemäß Figur 3, wobei in diesem Fall der Algorithmus 102 spezifisch von einem neuronalen Netzwerk wie zum Beispiel in den Figuren 5 und 6 beschrieben gebildet ist. Zusätzlich ist bei dem Ausführungsbeispiel gemäß Figur 7 eine Optimierungsfunktion 108 vorgesehen.

Dort werden abgespeicherte Trainingsdaten zur Optimierung 125 des neuronalen Netzwerks mit laufenden Verifikationsergebnissen 107 ergänzt, sodass erweiterte, optimierte Trainingsdaten erhalten werden. Damit werden optimierte Parameter 109, insbesondere Verknüpfungen und Gewichtungen, an das neuronale Netzwerk zu deren Optimierung 125 ausgegeben. Weiterhin werden optimierte Parameter 110 an die externe Datenquelle 301, das heißt den digitalen Zwilling ausgegeben, um dort generierte Daten zu optimieren.

Wird damit eine Verbesserung der Verifikationsergebnisse 107 erhalten, wird die erhaltene Optimierung 125 beibehalten. Bei einer Verschlechterung der Verifikationsergebnisse 107 wird die Optimierung 125 weiter vorangetrieben.

Figur 8 zeigt ein Beispiel der abgeleiteten Größen 103, das heißt der Prozessgrößen für den Sensor 1 der Figuren 1 und 2.

Der Sensor 1 generiert als Messwerte 101 Positionswerte. Mittels des Algorithmus 102 wird als abgeleitete Größe 103 die Geschwindigkeit des fahrerlosen Transportfahrzeugs 8 berechnet.

Abhängig hiervon wird als Sicherheitsfunktion 201 eine Umschaltung von Schutzfeldern generiert.

Durch die System-Modellierung 104 erfolgt eine Rückrechnung der abgeleiteten Größen 103, das heißt der Geschwindigkeit des fahrerlosen Transportfahrzeugs 8, in zurückgerechnetem Wert 105 im Sensorraum der Messwerte 101 durch Bildung des Integrals *x* = ∫ *vdt.*

Die so generierten zurückgerechneten Werte 105 werden in der Verifikationseinheit zur Generierung des Verifikationsergebnisses 107 mit den Messwerten 101 verglichen, entsprechend der Ausführungsform gemäß Figur 8.

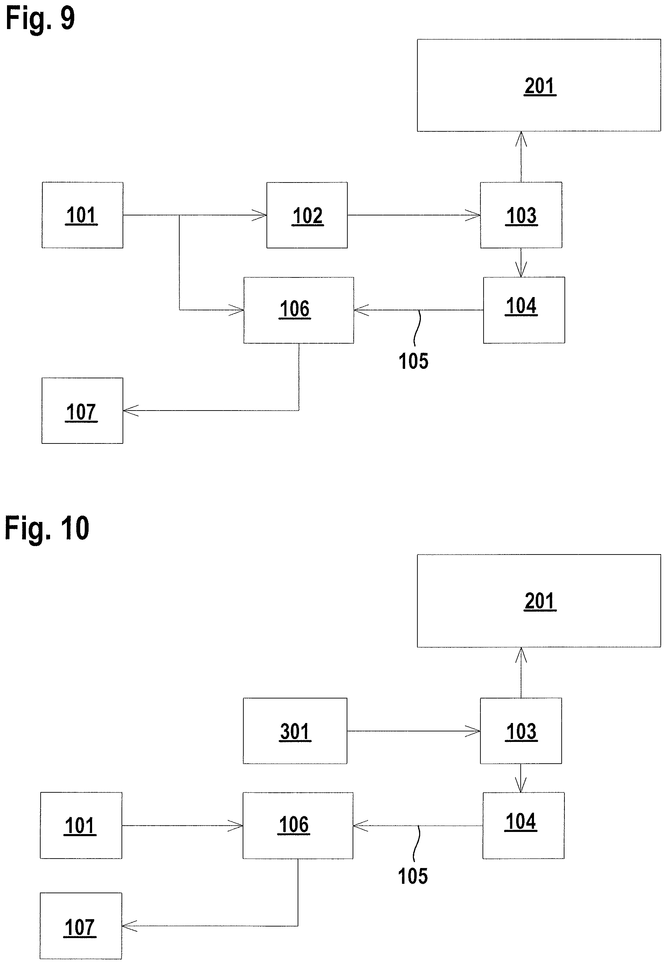

Figur 9 zeigt ein Beispiel von abgeleiteten Größen 103 für einen Kamerasensor, mit dem eine Schutzfeldüberwachung durchgeführt wird.

In diesem Fall generiert der Sensor 1 als Messwerte 101 Bilder. Der Algorithmus 102 extrahiert beziehungsweise generiert aus diesen Bildern bestimmte Objekte, insbesondere auch Personen oder Körperteile von Personen, die mit dem Kamerasensor erfasst werden. Als abgeleitete Größen 103 wird eine Objektsammlung generiert. Abhängig von den abgeleiteten Größen 103 wird als Sicherheitsfunktion 201 eine Schutzfeldverletzung gemeldet, um zum Beispiel damit eine Anlage stillzusetzen.

In der System-Modellierung 104 erfolgt ein Rückrechnen der Objekte der Objektsammlung, das heißt den abgeleiteten Größen 103, in zurückgerechnete Werte 105 in Form virtueller Bilder im Sensorraum des Kamerasensors. Bei der Verifikation 106 werden die zurückgerechneten Werte 105 mit den Messwerten 101 zur Generierung des Verifikationsergebnisses 107 verglichen.

Figur 10 zeigt eine Abwandlung der Ausführungsform des Beispiels gemäß Figur 9.

In diesem Fall generiert die externe Datenquelle 301, nicht der Kamerasensor selbst, die abgeleitete Größen 103 in Form der Objektsammlung, die zur Generierung der Sicherheitsfunktion 201 führt.

Analog zum Ausführungsbeispiel gemäß Figur 9 werden mit der System-Modellierung 104 durch Rückrechnung der Objektsammlung, das heißt der abgeleiteten Größen 103 die zurückgerechneten Werte 105 gewonnen, die in der Verifikationseinheit zur Verifikation 106 mit den Messwerten 101 verglichen werden, wodurch die Verifikationsergebnisse 107 gewonnen werden.

### Bezugszeichenliste

- (1): Sensor
- (2): Sockel
- (3): Messkopf
- (4): Lichtstrahl
- (5): Sender
- (6): Empfänger
- (7): Objekt
- (8): fahrerloses Transportfahrzeug
- (9): Schutzfeld
- (10): Sensoranordnung

- (101): Messwert
- (102): Algorithmus
- (103): abgeleitete Größen
- (104): System-Modellierung
- (105): zurückgerechneter Wert
- (106): Verifikation
- (107): Verifikationsergebnis
- (108): Optimierungsfunktion
- (109): Parameter
- (110): Parameter
- (111): Absolutwert der Differenz
- (112): Summierung
- (113): zeitliche Bewertung
- (121): Eingangsschicht
- (122): Zwischenschicht
- (123): Zwischenschicht
- (124): Ausgangsschicht
- (125): Optimierung
- (201): Sicherheitsfunktion

- (301): externe Datenquelle

- xₙ: Eingangassignal
- wₙ: Gewichte
- b: Gewicht
- f: Transferfunktion
- y: Ausgangssignal
- A: Drehachse

## Patentansprüche

1. Sensoranordnung (10) mit einem Messwerte (101) generierenden Sensor (1), mit einem Rechenmodul, in welchem mittels eines Algorithmus (102) aus den Messwerten (101) abgeleitete Größen (103) generiert werden, mit einer Sicherheitsfunktion (201), mit welcher abhängig von im Rechenmodul oder einer externen Datenquelle (301) generierten abgeleiteten Größen (103) ein Sicherheitsergebnis generiert wird, mit einem Systemmodellierungsmodul, in welchem aus abgeleiteten Größen (103) zurückgerechnete Werte (105) in einem Sensorraum des Sensors (1) generiert werden, und mit einer Verifikationseinheit, in welcher eine Verifizierung des Algorithmus (102) oder von Daten der externen Datenquelle (301) durch einen Vergleich der zurückgerechneten Werte (105) mit den Messwerten (101) erfolgt.

2. Sensoranordnung (10) nach Anspruch 1, **dadurch gekennzeichnet, dass** der Sensor (1) ein Sicherheitssensor ist.

3. Sensoranordnung (10) nach Anspruch 2, **dadurch gekennzeichnet, dass** die Sicherheitsfunktion (201) eine Überwachungsfunktion ist.

4. Sensoranordnung (10) nach einem der Ansprüche 1 bis 3, **dadurch gekennzeichnet, dass** der Sensor (1) ein optischer Sensor ist.

5. Sensoranordnung (10) nach Anspruch 4, **dadurch gekennzeichnet, dass** der optische Sensor ein Flächendistanzsensor oder ein Kamerasensor ist.

6. Sensoranordnung (10) nach einem der Ansprüche 1 bis 5, **dadurch gekennzeichnet, dass** im Rechenmodul ein unsicherer Schätz-Algorithmus (102) implementiert ist.

7. Sensoranordnung (10) nach einem der Ansprüche 1 bis 6, **dadurch gekennzeichnet, dass** im Rechenmodul ein neuronales Netzwerk implementiert ist.

8. Sensoranordnung (10) nach einem der Ansprüche 1 bis 7, **dadurch gekennzeichnet, dass** die externe Datenquelle (301) eine unsichere Datenquelle ist.

9. Sensoranordnung (10) nach einem der Ansprüche 1 bis 8, **dadurch gekennzeichnet, dass** die externe Datenquelle (301) in Form eines digitalen Zwillings ausgebildet ist.

10. Sensoranordnung (10) nach einem der Ansprüche 1 bis 9, **dadurch gekennzeichnet, dass** in der Verifikationseinheit durch Ermitteln von Abweichungen der zurückgerechneten Werte (105) bezüglich der Messwerte (101) Verifikationsergebnisse (107) generiert werden.

11. Sensoranordnung (10) nach Anspruch 10, **dadurch gekennzeichnet, dass** zur Bestimmung von Verifikationsergebnissen (107) eine zeitliche Bewertung (113) der Abweichungen der zurückgerechneten Werte bezüglich der Messwerte (101) durchgeführt wird.

12. Sensoranordnung (10) nach einem der Ansprüche 10 oder 11, **dadurch gekennzeichnet, dass** über einen Zeitraum eine fortlaufende Summierung (112) der Abweichungen der zurückgerechneten Werte (105) bezüglich der Messwerte (101) durchgeführt wird.

13. Sensoranordnung (10) nach einem der Ansprüche 10 bis 12, **dadurch gekennzeichnet, dass** die Verifikationsergebnisse (107) während des Betriebs des Sensors (1) generiert werden.

14. Sensoranordnung (10) nach einem der Ansprüche 10 bis 13, **dadurch gekennzeichnet, dass** ein positives Ergebnis der Überwachungsfunktion nur dann generiert wird, wenn mit der Verifikationseinheit ein positives Verifikationsergebnis (107) erzeugt wird.

15. Sensoranordnung (10) nach Anspruch 14, **dadurch gekennzeichnet, dass** bei einem negativen Verifikationsergebnis (107) eine Sicherheitsmaßnahme ausgelöst wird.

16. Sensoranordnung (10) nach Anspruch 15, **dadurch gekennzeichnet, dass** als Sicherheitsmaßnahme eine Abschaltung des Sensors (1) oder einer mit dem Sensor (1) überwachten Anlage vorgesehen ist.

17. Sensoranordnung (10) nach einem der Ansprüche 10 bis 16, **dadurch gekennzeichnet, dass** abhängig von Verifikationsergebnissen (107) Parameter (109, 110) des Algorithmus (102) optimiert werden.

18. Sensoranordnung (10) nach einem der Ansprüche 10 bis 17, **dadurch gekennzeichnet, dass** abhängig vom Verifikationsergebnis (107) Daten der externen Datenquelle (301) ergänzt oder verbessert werden.

19. Verfahren zum Betrieb einer Sensoranordnung (10) mit einem Messwerte (101) generierenden Sensor (1), mit einem Rechenmodul, in welchem mittels eines Algorithmus (102) aus den Messwerten (101) abgeleitete Größen (103) generiert werden, mit einem Überwachungsmodul, in welchem abhängig von im Rechenmodul oder einer externen Datenquelle (301) generierten abgeleiteten Größen (103) mit einer Sicherheitsfunktion (201) ein Sicherheitsergebnis generiert wird, mit einem Systemmodellierungsmodul, in welchem aus abgeleiteten Größen (103) zurückgerechnete Werte (105) in einem Sensorraum des Sensors (1) generiert werden, und mit einer Verifikationseinheit, in welcher eine Verifizierung des Algorithmus (102) oder von Daten der externen Datenquelle (301) durch einen Vergleich der zurückgerechneten Werte (105) mit den Messwerten (101) erfolgt.
